# EUROPÄISCHE PATENTSCHRIFT

(11) **EP 3 334 638 B1**
(45) Veröffentlichungstag und Bekanntmachung des Hinweises auf die Patenterteilung: **28.08.2019**
(21) Anmeldenummer: 16741969.6
(22) Anmeldetag: 26.07.2016
(51) Int. Cl.: B62D 5/083

(54) **SERVOLENKBAUGRUPPE MIT LENKMOMENTÜBERLAGERUNG**
POWER STEERING ASSEMBLY COMPRISING STEERING TORQUE OVERLAY
ENSEMBLE DE DIRECTION ASSISTÉE À SUPERPOSITION DE COUPLE DE BRAQUAGE

(30) Priorität: 14.08.2015 DE 102015113461
(43) Veröffentlichungstag der Anmeldung: 20.06.2018
(73) Patentinhaber: Knorr-Bremse Steeringsystems GmbH, 42489 Wülfrath (DE)
(72) Erfinder: KIRSCHBAUM, Sven, 40822 Mettmann (DE); LOBE, Ulf, 42109 Wuppertal (DE)
(74) Vertreter: Patentanwälte Bauer Vorberg Kayser
(86) Internationale Anmeldenummer: PCT/EP2016/067822
(87) Internationale Veröffentlichungsnummer: WO 2017/029083

(56) Entgegenhaltungen:
- DE-A1-102009 029 532

## Beschreibung

Die vorliegende Erfindung betrifft eine Servolenkbaugruppe für eine Servolenkung, insbesondere für eine hydraulische Servolenkung, von Kraftfahrzeugen nach dem Oberbegriff des Anspruchs 1.

Servolenkbaugruppen für hydraulische Servolenkungen von Fahrzeugen umfassen unter anderem Servoventile, die auch als Drehservoventile bekannt sind. Diese regeln den Hydraulikdruck und damit die Lenkunterstützung in Abhängigkeit vom aufgebrachten Lenkmoment des Fahrers. Es kommen meist Drehservoventile zum Einsatz, bei denen sich eine Eingangswelle, die über eine Lenksäule mit einem Lenkrad verbunden ist, relativ zu einem Ventilteil (auch als Stellglied, Ventilhülse oder Sleeve bezeichnet) verdreht, das mit der Ausgangswelle und bei Zahnstangenlenkungen mit einem Lenkritzel (auch als Pinion bezeichnet) verbunden ist. Durch ein Torsionssystem zwischen Eingangswelle und Stellglied werden eine drehmomentabhängige Verstellung des Stellglieds des Servoventils und somit eine drehmomentabhängige Ventil- und damit Lenkkraftunterstützungscharakteristik realisiert.

Zur Verwirklichung diverser weiterer Funktionen eines Momentenstellers, beispielsweise Spurhalteassistent, Über- und Untersteuerungsassistent, haptisches Feedback, variable Lenkunterstützung zum Beispiel in Abhängigkeit von der Fahrzeuggeschwindigkeit oder Beladung, Citymode, Parkpilot, Lenkmomentüberlagerung usw., ist eine vom anliegenden Drehmoment an der Eingangswelle unabhängige Beeinflussung der Lenkkraftunterstützungscharakteristik des Servoventils bekannt.

So offenbart beispielsweise die DE 10 2009 029 532 A1 als nächstliegender Stand der Technik eine Servolenkbaugruppe für eine hydraulische Servolenkung von Kraftfahrzeugen mit zwei Planetengetrieben, wobei das erste Planetengetriebe um das Stellglied angeordnet ist und das zweite um die Ausgangswelle bzw. das Lenkritzel angeordnet ist. Hierbei sind das Sonnenrad des ersten Planetengetriebes fest mit dem Stellglied und das Sonnenrad des zweiten Planetengetriebes fest mit der Ausgangswelle verbunden. Die Hohlräder der beiden Planetengetriebe sind voneinander unabhängig drehbar gelagert. Die Verbindung der zwei Planetengetriebe wird mit einem gemeinsamen Planetenträger erzielt, welcher die Planetenräder der zwei Getriebe auf gemeinsamen Wellen trägt. Die Planetenräder können sich unabhängig auf den Wellen drehen. Die zwei Hohlräder weisen zwei unterschiedliche Außenverzahnungen auf, in welche ein zweistufiges Ritzel eingreift. Eine Rotation dieses Ritzels bewirkt eine Rotation beider Hohlräder, wobei sich durch die unterschiedlichen Außenverzahnungen der Hohlräder ein Differenzwinkel zwischen diesen einstellt. Dieser Differenzwinkel wird durch die Übersetzung der Planetengetriebe leicht verstärkt auf das Stellglied und die Ausgangswelle weitergegeben.

Vor diesem Hintergrund liegt der vorliegenden Erfindung die Aufgabe zugrunde, eine vereinfachte Servolenkbaugruppe für eine hydraulische Servolenkung von Kraftfahrzeuge mit einer Lenkmomentüberlagerung bereitzustellen, die insbesondere kleiner und leichter baut. Unabhängig von einer von einem Fahrer des Kraftfahrzeugs vorgegebenen Lenkeingangsgröße soll über einen Aktor eine Lenküberlagerungsgröße überlagerbar sein, ohne dass der Aktor den Lenkbewegungen des Fahrers folgen muss.

Diese Aufgabe wird durch eine Servolenkbaugruppe mit den Merkmalen des Anspruchs 1 gelöst. Weitere, besonders vorteilhafte Ausgestaltungen der Erfindung offenbaren die Unteransprüche.

Es ist darauf hinzuweisen, dass die in den Ansprüchen einzeln aufgeführten Merkmale in beliebiger, technisch sinnvoller Weise miteinander kombiniert werden können und weitere Ausgestaltungen aufzeigen. Die Beschreibung charakterisiert und spezifiziert die Erfindung insbesondere im Zusammenhang mit den Figuren zusätzlich.

Erfindungsgemäß umfasst eine Servolenkbaugruppe für eine hydraulische Servolenkung von Kraftfahrzeugen wenigstens ein hydraulisches Servoventil und wenigstens einen Aktor.

Das hydraulische Servoventil weist im Wesentlichen eine Eingangswelle, eine Ausgangswelle und ein Stellglied auf. Das Stellglied, auch als Steuerelement bezeichnet, dient zur Steuerung der Lenkunterstützung in Abhängigkeit von der Relativverdrehung der Eingangswelle gegenüber der Ausgangswelle. Unter dem Begriff "Stellglied" ist in dieser Beschreibung stets das Zusammenwirken von im Wesentlichen zwei Funktionseinheiten, nämlich einer Steuerhülse einerseits und eingangswellenseitigen Steuerkanten andererseits, zu verstehen.

Der wenigstens eine Aktor der erfindungsgemäßen Servolenkbaugruppe dient zur Relativverstellung des Stellglieds gegenüber der Eingangswelle oder der Ausgangswelle. Dies ermöglicht eine Beeinflussung der Lenkunterstützungscharakteristik. Hierbei ist zu verstehen, dass die durch einen Fahrer an der Eingangswelle hervorgerufene Drehbewegung unabhängig von der Aktivität des Aktors stets an die Ausgangswelle übertragen wird. Selbst in dem Fall beispielsweise, in dem der Aktor ausfällt, ist die normale Funktion der Servolenkbaugruppe gewährleistet.

Des Weiteren umfasst die erfindungsgemäße Servolenkbaugruppe ein Summiergetriebe und ein Umlaufrädergetriebe.

Das Summiergetriebe weist ein erstes, mit dem Stellglied in Wirkeingriff stehendes drehbares Antriebsglied und ein zweites, mit einem Abtriebselement des Aktors in Wirkeingriff stehendes drehbares Antriebsglied und ein Abtriebsglied auf. Das Summiergetriebe zeichnet sich dadurch aus, dass es eine Rotation des ersten Antriebsglieds mit einer Rotation des zweiten Antriebsglieds überlagert und über das Abtriebsglied das Umlaufrädergetriebe antreibt.

Das Umlaufrädergetriebe umfasst wenigstens ein Umlaufrad, das sowohl mit der Eingangswelle oder Ausgangswelle als auch dem Stellglied gemeinsam in Wirkeingriff steht. Die hierin verwendete Bezeichnung "Eingangswelle oder Ausgangswelle" stellt eine Alternative dar, bei der entweder ein Bezug auf die Eingangswelle des Servoventils oder auf die Ausgangswelle des Servoventils zu verstehen ist. In dem vorstehenden Fall steht das Umlaufrad dementsprechend entweder mit der Eingangswelle und dem Stellglied oder mit der Ausgangswelle und dem Stellglied in Wirkeingriff. Das Umlaufrad ist sowohl um eine gestellfeste Umlaufachse des Umlaufrädergetriebes als auch um eine um die gestellfeste Umlaufachse umlaufende eigene Rotationsachse drehbar. Gestellfest bedeutet in diesem Zusammenhang, dass sich die Lage der Umlaufachse in Bezug auf die Servolenkbaugruppe beim Betrieb des Umlaufrädergetriebes nicht verändert.

Erfindungsgemäß treibt das Abtriebsglied des Summiergetriebes das Umlaufrädergetriebe derart an, dass eine Rotation des ersten Antriebsglieds des Summiergetriebes eine Rotation der um die gestellfeste Umlaufachse umlaufenden eigenen Rotationsachse des Umlaufrads derart bewirkt, dass hierdurch keine Rotation des Umlaufrads um seine eigene Rotationsachse auftritt. Das Umlaufrad kreist in diesem Fall demnach lediglich um die gestellfeste Umlaufachse des Umlaufrädergetriebes, dreht sich hierbei jedoch nicht um die eigene Rotationsachse. Mit anderen Worten muss sich in diesem Fall die eigene Rotationsachse des Umlaufrads mit derselben Winkelgeschwindigkeit um die gestellfeste Umlaufachse drehen wie sich die Eingangswelle oder Ausgangswelle, mit welcher das Umlaufrad in Wirkeingriff steht, dreht. Da das Umlaufrad in Wirkeingriff sowohl mit der Eingangswelle oder Ausgangswelle als auch dem Stellglied steht, bewirkt diese Bewegung des Umlaufrads, dass eine Rotation der Eingangswelle oder Ausgangswelle übersetzungsfrei, das heißt 1:1, auf das Stellglied übertragen wird. Das Stellglied folgt dementsprechend der Rotation der Eingangswelle oder Ausgangswelle, wie es bei einer herkömmlichen Servolenkbaugruppe ohne Lenkmomentüberlagerung auch der Fall ist.

Im Gegensatz hierzu bewirkt eine Rotation des zweiten Antriebsglieds des Summiergetriebes eine Rotation des Umlaufrads um seine eigene Rotationsachse. Erfindungsgemäß bewirkt die Rotation des Umlaufrads um seine eigene Rotationsache eine Relativverdrehung der Eingangswelle oder Ausgangswelle gegenüber dem Stellglied, wodurch ein Differenzwinkel zwischen der Eingangswelle oder Ausgangswelle und dem Stellglied für eine Lenkmomentüberlagerung eingestellt werden kann. Da das zweite Antriebsglied des Summiergetriebes mit dem Abtriebselement des Aktors in Wirkeingriff steht und die Drehbewegung des zweiten Antriebsglieds unabhängig von der Drehbewegung des ersten Antriebsglieds mit dieser überlagerbar wird, ist die Lenkmomentüberlagerung folglich über den Aktor unabhängig von einer über die Eingangswelle des Servoventils eingeleiteten Lenkbewegung eines Fahrers des Kraftfahrzeugs möglich. Der Aktor muss der Lenkbewegung des Fahrers demnach nicht folgen, was eine erhebliche Vereinfachung des Betriebs der Servolenkbaugruppe darstellt. Darüber hinaus lässt sich das Umlaufrädergetriebe wesentlich einfacher, kleiner und weniger Bauteile erfordernd ausgestalten als das Summiergetriebe, so dass die Servolenkbaugruppe insgesamt kleiner und leichter baut. Da lediglich das Umlaufrädergetriebe unmittelbar die Einstellung des Differenzwinkels zwischen der Eingangswelle oder Ausgangswelle und dem Stellglied bewirkt, kann das Summiergetriebe außerdem mit einer deutlich geringeren Verzahnungsgüte ausgeführt werden als das Umlaufrädergetriebe. Die im Summiergetriebe vorhandenen Spiele zwischen den einzelnen Komponenten wirken sich nur marginal auf die Übersetzung zwischen der Eingangswelle oder Ausgangswelle und dem Stellglied aus, wie sie durch das Umlaufrädergetriebe festgelegt ist.

Eine vorteilhafte Ausgestaltung der Erfindung sieht vor, dass das Umlaufrädergetriebe konzentrisch um die Eingangswelle oder Ausgangswelle und das Stellglied angeordnet ist. Ferner weist das Umlaufrädergetriebe ein drehfest mit dem Stellglied verbundenes erstes Sonnenrad auf und ein drehfest mit der Eingangswelle oder Ausgangswelle verbundenes zweites Sonnenrad auf. Das Umlaufrad steht hierbei mit beiden Sonnenrädern in Dreheingriff. Unter Dreheingriff ist im Sinne der vorliegenden Erfindung sowohl eine reibschlüssige als auch eine formschlüssige Art der Übertragung einer Drehbewegung zu verstehen, in diesem Fall beispielsweise zwischen dem Umlaufrad und den beiden Sonnenrädern. Die konzentrische Anordnung des Umlaufrädergetriebes um die Eingangswelle oder Ausgangswelle und dem Stellglied sowie der Dreheingriff zwischen dem Umlaufrädergetriebe und der Eingangswelle oder Ausgangswelle und dem Stellglied ermöglichen einen kompakten und platzsparenden Aufbau der erfindungsgemäßen Servolenkbaugruppe.

Eine Relativverdrehung der beiden Sonnenräder zueinander durch die Rotation des Umlaufrads lässt sich beispielsweise durch unterschiedliche Außendurchmesser der Sonnenräder, die beide auf dem gemeinsamen Umlaufrad ablaufen, leicht realisieren.

Bevorzugt ist das Umlaufrad ein Zahnrad und die beiden Sonnenräder des Umlaufrädergetriebes weisen unterschiedliche Außenverzahnungen auf. Um in diesem Fall eine spielfreie oder nahezu spielfreie Übertragung der Übersetzung zwischen den beiden Sonnenrädern zu erreichen, sind lediglich das Umlaufrad und die beiden Sonnenräder des Umlaufrädergetriebes in hoher Verzahnungsgüte auszulegen. Der Aufbau des Summiergetriebes kann in diesem Fall mit Verzahnungsteilen niedrigerer Qualität erfolgen, da sich die dort entstehenden Spiele nur marginal auf die Relativverdrehung der Eingangswelle oder Ausgangswelle gegenüber dem Stellglied auswirken. Darüber hinaus lässt sich ein möglicherweise vorhandenes Spiel zwischen dem Umlaufrad und den beiden Sonnenrädern durch Heranführen des Umlaufrads an die Sonnenräder auf einfache Weise beseitigen.

Gemäß einer weiteren bevorzugten Ausgestaltung der Erfindung ist das wenigstens eine Umlaufrad des Umlaufrädergetriebes von einem um die Umlaufachse des Umlaufrädergetriebes drehbaren Umlaufradträger drehbar gehalten. Der Umlaufradträger steht hierbei in Dreheingriff mit dem Abtriebsglied des Summiergetriebes. Auf diese Weise lässt sich der erfindungsgemäß vorgesehene Antrieb des Umlaufrädergetriebes durch das Summiergetriebe mit möglichst wenigen Komponenten realisieren, was zu einer weiteren Platzersparnis und einem noch leichteren und kompakteren Aufbau der Servolenkbaugruppe führt.

Eine noch weitere vorteilhafte Ausgestaltung der Erfindung sieht vor, dass drehfest mit dem Stellglied ein Nebenantriebsrad verbunden ist, das mit dem ersten Antriebsglied des Summiergetriebes in Dreheingriff steht.

Gemäß einer noch weiteren vorteilhaften Ausgestaltung der Erfindung ist das Summiergetriebe ein Planetengetriebe mit einem Sonnenrad, einem oder mehreren von einem Planetenträger drehbar gehaltenen Planetenrädern und einem Hohlrad. Hierbei bildet das Hohlrad das erste Antriebsglied des Summiergetriebes, das Sonnenrad das zweite Antriebsglied des Summiergetriebes und der Planetenträger das Abtriebsglied des Summiergetriebes.

Besonders bevorzugt ist das Planetengetriebe ein Zahnradgetriebe, wobei das Hohlrad sowohl eine Innenverzahnung, die mit dem einen oder den mehreren Planetenrädern in Dreheingriff steht, als auch eine Außenverzahnung aufweist, die mit einer Außenverzahnung des mit dem Stellglied verbundenen Nebenantriebsrads in Dreheingriff steht.

Eine noch weitere bevorzugte Ausgestaltung der Erfindung sieht vor, dass der Aktor ein elektrischer Antriebsmotor ist und das Abtriebselement eine von dem Antriebsmotor angetriebene Abtriebswelle ist, die drehfest mit dem zweiten Antriebsglied des Summiergetriebes verbunden ist. Auf diese Weise lässt sich die Drehbewegung des Antriebsmotors unmittelbar für den Drehantrieb des zweiten Antriebsglieds im Summiergetriebe ohne weitere Umsetzung nutzen.

Gemäß einer besonders bevorzugten, vorteilhaften Ausgestaltung der Erfindung ist das Summiergetriebe exzentrisch zur Eingangswelle oder Ausgangswelle und dem Stellglied angeordnet. Hierdurch lassen sich insbesondere Bauraumvorteile der erfindungsgemäßen Servolenkbaugruppe erzielen.

Weitere Merkmale und Vorteile der Erfindung ergeben sich aus der folgenden Beschreibung eines nicht einschränkend zu verstehenden Ausführungsbeispiels der Erfindung, die im Folgenden unter Bezugnahme auf die Zeichnung näher erläutert wird. In dieser Zeichnung zeigt schematisch:

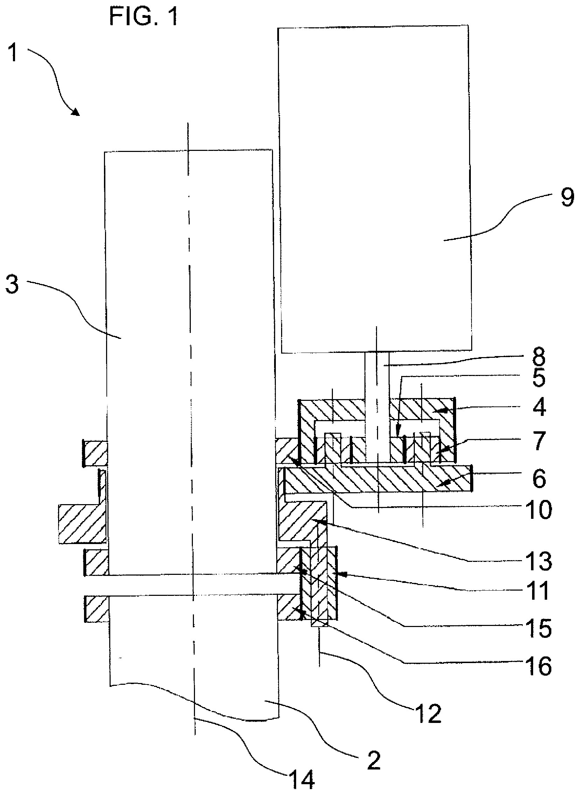

- Fig. 1: eine Seitenschnittansicht eines Ausführungsbeispiels einer erfindungsgemäßen Servolenkbaugruppe.

Fig. 1 stellt eine Seitenschnittansicht eines Ausführungsbeispiels einer Servolenkbaugruppe 1 gemäß der Erfindung dar.

Die Servolenkbaugruppe 1 umfasst im Wesentlichen ein hydraulisches Servoventil, einen Aktor, ein Summiergetriebe und ein Umlaufrädergetriebe.

Das Servoventil weist im Wesentlichen eine Eingangswelle (nicht dargestellt), eine Ausgangswelle 2 und ein Stellglied 3 auf. Die Eingangswelle ist über eine nicht gezeigte Lenksäule mit einem Lenkrad eines Kraftfahrzeugs verbunden. Die Ausgangswelle 2 ist wiederum mittelbar mit zu drehenden, nicht dargestellten Rädern des Kraftfahrzeugs verbunden. Die Eingangswelle ist in bekannter Weise über einen Torsionsstab (ebenfalls nicht dargestellt) mit der Ausgangswelle 2 verbunden, wobei der Torsionsstab an seinem einen Ende drehfest mit der Eingangswelle und an seinem anderen Ende drehfest mit der Ausgangswelle 2 verbunden ist. Dementsprechend stellt der Torsionsstab eine Kopplung zwischen der Eingangswelle und der Ausgangswelle 2 her, wobei er eine Relativverdrehung zwischen diesen zulässt. Ferner ist konzentrisch zur Eingangswelle und um diese herum das Stellglied 3 angeordnet. Das Stellglied 3 ist relativ zu der Eingangswelle dreh- und/oder verschiebbar gelagert.

Die Funktion und Wirkungsweise der bis hier beschriebenen Servolenkbaugruppe 1 sind aus dem Stand der Technik allgemein bekannt.

Wie Fig. 1 weiter zu entnehmen ist, umfasst das Summiergetriebe ein erstes Antriebsglied 4, ein zweites Antriebsglied 5 sowie ein Abtriebsglied 6. Das Summiergetriebe der dargestellten Servolenkbaugruppe 1 ist als Planetenzahnradgetriebe ausgebildet, bei dem ein Hohlrad das erste Antriebsglied 4 bildet, ein Sonnenrad das zweite Antriebsglied 5 und ein Planetenträger das Abtriebsglied 6. Der Planetenträger 6 trägt mehrere Planetenräder 7, die auf entsprechenden Wellen drehbar gelagert sind und mit einer Innenverzahnung des Hohlrads 4 und einer Verzahnung des Sonnenrads 5 in bekannter Weise in Dreheingriff stehen.

Das zweite Antriebsglied 5 des Summiergetriebes ist drehfest mit einem Abtriebselement 8 des Aktors 9 verbunden. Bei dem in Fig. 1 dargestellten Ausführungsbeispiel der Servolenkbaugruppe 1 ist der Aktor 9 ein elektrischer Antriebsmotor mit einer angetriebenen Abtriebswelle, die das Abtriebselement 8 bildet.

Des Weiteren ist in Fig. 1 zu erkennen, dass mit dem Stellglied 3 ein Nebenantriebsrad 10 drehfest verbunden ist. Über das Nebenantriebsrad 10 steht das Stellglied 3 in Wirkeingriff mit dem ersten Antriebsglied 4, insbesondere mit dem Hohlrad 4, des Summiergetriebes. Hierzu weist das Hohlrad 4 ebenfalls eine Außenverzahnung auf, über die das als Zahnrad ausgebildete Nebenantriebsrad 10 in Dreheingriff steht.

Wie Fig. 1 zu entnehmen ist, ist das Summiergetriebe der Servolenkbaugruppe 1 exzentrisch zur Ausgangswelle 2 und zum Stellglied 3 angeordnet.

Außerdem ist in Fig. 1 das von dem Summiergetriebe angetriebene Umlaufrädergetriebe zu erkennen. Dieses umfasst ein Umlaufrad 11, das um seine eigene Rotationsachse 12 drehbar auf einem Umlaufradträger 13 gehalten ist. Der Umlaufradträger 13 steht in Wirkeingriff mit dem Abtriebsglied 6, insbesondere dem Planetenträger 6, des Summiergetriebes. Bei der in Fig. 1 dargestellten Servolenkbaugruppe 1 weist der Planetenträger 6 des Summiergetriebes hierzu eine Außenverzahnung auf, die in Dreheingriff mit einer Außenverzahnung des Umlaufradträgers 13 des Umlaufrädergetriebes steht. Der Umlaufradträger 13 ist ferner um eine Umlaufachse 14, die eine gestellfeste Umlaufachse bezüglich der Servolenkbaugruppe 1 ist, drehbar gelagert. Das Umlaufrad 11 kann sich somit sowohl um seine eigene Rotationsachse 12 als auch um die Umlaufachse 14 drehen. Das Umlaufrädergetriebe ist, wie in Fig. 1 zu erkennen ist, bei dem gezeigten Ausführungsbeispiel der Servolenkbaugruppe 1 konzentrisch um die Ausgangswelle 2 und das Stellglied 3 angeordnet.

Wie der Fig. 1 weiter zu entnehmen ist, steht das bei der gezeigten Servolenkbaugruppe 1 als Zahnrad ausgebildete Umlaufrad 11 ferner mit jeweils einem Sonnenrad 15 und einem Sonnenrad 16 in Wirkeingriff, insbesondere in Dreheingriff. Das Sonnenrad 15 ist drehfest mit dem Stellglied 3 verbunden. Das Sonnenrad 16 ist drehfest mit der Ausgangswelle 2 verbunden. Beide Sonnenräder 15 und 16 weisen eine unterschiedliche Anzahl an Zähnen auf, so dass eine Rotation des für die beiden Sonnenräder 15 und 16 gemeinsamen Umlaufrads 11 um seine eigene Rotationsachse 12 zu einer Relativverdrehung der Ausgangswelle 2 gegenüber dem Stellglied 3 führt. Eine Rotation des Umlaufrads 11 wird hervorgerufen durch eine Rotation des Umlaufradträgers 13 um die Umlaufachse 14. Diese Rotation kann über den Antrieb durch das Summiergetriebe bewirkt werden. Mittels einer Rotation des Umlaufrads 11 um seine eigene Rotationsachse 12, das heißt bei einer relativen Verdrehung des Umlaufradträgers 13 gegenüber der Ausgangswelle 2, bei der das Umlaufrad 11 auf den Sonnenrädern 15 und 16 abläuft, ist dementsprechend die Einstellung eines Differenzwinkels zwischen der Ausgangswelle 2 und dem Stellglied 3 möglich, um hierdurch die Lenkunterstützungscharakteristik zu verändern.

Soll kein Differenzwinkel zwischen den beiden Sonnenrädern 15 und 16 eingestellt werden, ist es notwendig, den Umlaufradträger 13 mit derselben Winkelgeschwindigkeit um die Umlaufachse 14 zu drehen wie sich die Ausgangswelle 2 dreht. In diesem Fall kann sich das Umlaufrad 11 selbst nicht um seine eigene Rotationsachse 12 drehen.

Das Verdrehen des Umlaufradträgers 13 erfolgt bei dem in Fig. 1 gezeigten Ausführungsbeispiel der erfindungsgemäßen Servolenkbaugruppe 1 durch ein Verdrehen des Planetenträgers 6.

In dem Fall, in dem das Abtriebselement 8 des Aktors 9 bzw. die Abtriebswelle 9 des Antriebsmotor 9 still steht, sich die Ausgangswelle 2 jedoch dreht, wird das Summiergetriebe über das mit dem Stellglied 3 verbundene Nebenantriebsrad 10 angetrieben. Die Übersetzung des Summiergetriebes wird hierbei derart gewählt, dass die Rotation des ersten Antriebsglieds 4 bzw. des Hohlrads 4 eine Winkelgeschwindigkeit des Abtriebsglieds 6 bzw. des Planetenträgers 6 derart bewirkt, dass sich der Umlaufradträger 13 aufgrund seiner Kopplung mit dem Planetenträger 6 des Summiergetriebes mit der gleichen Winkelgeschwindigkeit dreht wie die Ausgangswelle 2. Das Umlaufrad 11 dreht sich somit nicht um seine eigene Rotationsachse 12, womit sich kein Differenzwinkel zwischen den Sonnenrädern 15 und 16 einstellt.

In dem Fall, in dem die Ausgangswelle 2 still steht, sich das Abtriebselement 9 des Aktors 9 bzw. die Abtriebswelle 9 des Antriebsmotors 9 jedoch dreht, wird über das Drehen des ersten Antriebsglieds 5 bzw. des Sonnenrads 5 des Summiergetriebes ein Verdrehen des Abtriebsglieds 6 bzw. des Planetenträgers 6 eingeleitet. Da in diesem Fall die Ausgangswelle 2 still steht und der Umlaufradträger 13 aufgrund seiner Kopplung mit dem Planetenträger 6 um die Umlaufachse 14 verdreht wird und das Umlaufrad 11 nun auf den beiden Sonnenrädern 15 und 16 abläuft, stellt sich ein Differenzwinkel zwischen den Sonnenrädern 15 und 16 und somit zwischen der Ausgangswelle 2 und dem Stellglied 3 ein.

Der Fall, dass sich sowohl die Ausgangswelle 2 dreht als auch die Abtriebswelle 8 des Antriebsmotors 9, führt aufgrund der Funktion des Summiergetriebes, eine Rotation des ersten Antriebsglieds 4 bzw. des Hohlrads 4 mit einer Rotation des zweiten Antriebsglieds 5 bzw. des Sonnenrads 5 zu überlagern, zu einer Überlagerung der beiden zuvor beschriebenen Fälle.

Ein wesentlicher Vorteil der hierin beschriebenen Servolenkbaugruppe 1 gegenüber dem Stand der Technik ist, dass, um eine spielfreie oder nahezu spielfreie Übertragung der Übersetzung zwischen den Sonnenrädern 15 und 16 zu erreichen, nur das Umlaufrad 11 und die beiden Sonnenräder 15 und 16 in hoher Verzahnungsgüte ausgelegt werden müssen. Der Aufbau des exzentrisch gelagerten Summiergetriebes kann mit Verzahnungsteilen niedrigerer Qualität erfolgen, da sich die dort entstehenden Spiele nur marginal auf die Übersetzung zwischen dem Stellglied 3 und der Ausgangswelle 2 auswirken.

Ein weiterer Vorteil ist, dass das Spiel zwischen den Sonnenrädern 15 und 16 und dem Umlaufrad 11 durch das Heranführen des Umlaufrads 11 an die Sonnenräder 15 und 16 gemindert werden kann.

Ebenso kann bei Verwendung des exzentrischen Summiergetriebes der benötigte Bauraum der Servolenkbaugruppe reduziert und das Packaging optimiert werden.

Die erfindungsgemäße Servolenkbaugruppe wurde anhand eines in der Figur dargestellten Ausführungsbeispiels näher erläutert. Die Servolenkbaugruppe ist jedoch nicht auf die hierin beschriebene Ausführungsform beschränkt, sondern umfasst auch gleich wirkende weitere Ausführungsformen.

In bevorzugter Ausführung wird die erfindungsgemäße Servolenkbaugruppe für eine hydraulische Servolenkung mit Lenkmomentüberlagerung in einem Kraftfahrzeug verwendet.

### Bezugszeichenliste:

- 1: Servolenkbaugruppe
- 2: Ausgangswelle
- 3: Stellglied
- 4: Erstes Antriebsglied, Hohlrad
- 5: Zweites Antriebsglied, Sonnenrad
- 6: Abtriebsglied, Planetenträger
- 7: Planetenrad
- 8: Abtriebselement, Abtriebswelle
- 9: Aktor, elektrischer Antriebsmotor
- 10: Nebenantriebsrad
- 11: Umlaufrad
- 12: Eigene Rotationsachse von 11
- 13: Umlaufradträger
- 14: Umlaufachse
- 15: Sonnenrad
- 16: Sonnenrad

## Patentansprüche

1. Servolenkbaugruppe für eine hydraulische Servolenkung von Kraftfahrzeugen, umfassend wenigstens ein hydraulisches Servoventil mit einem Stellglied (3) zur Steuerung der Lenkunterstützung in Abhängigkeit von einer Relativverdrehung einer Eingangswelle gegenüber einer Ausgangswelle (2) und wenigstens einen Aktor (9) zur Relativverstellung des Stellglieds (3) gegenüber der Eingangswelle oder der Ausgangswelle (2), um die Lenkunterstützungscharakteristik zu beeinflussen,
**gekennzeichnet durch**
ein Summiergetriebe mit einem ersten, mit dem Stellglied (3) in Wirkeingriff stehenden drehbaren Antriebsglied (4) und einem zweiten, mit einem Abtriebselement (8) des Aktors (9) in Wirkeingriff stehenden drehbaren Antriebsglied (5) und einem Abtriebsglied (6), wobei das Summiergetriebe eine Rotation des ersten Antriebsglieds (4) mit einer Rotation des zweiten Antriebsglieds (5) überlagert und über das Abtriebsglied (6) ein Umlaufrädergetriebe mit wenigstens einem Umlaufrad (11), das sowohl mit der Eingangswelle oder Ausgangswelle (2) als auch dem Stellglied (3) gemeinsam in Wirkeingriff steht und sowohl um eine gestellfeste Umlaufachse (14) als auch um eine um die Umlaufachse (14) umlaufende eigene Rotationsachse (12) drehbar ist, derart antreibt, dass eine Rotation des ersten Antriebsglieds (4) eine Rotation der um die Umlaufachse (14) umlaufenden eigenen Rotationsachse (12) des Umlaufrads (11) derart bewirkt, dass hierdurch keine Rotation des Umlaufrads (11) um seine eigene Rotationsachse (12) auftritt, eine Rotation des zweiten Antriebsglieds (5) hingegen eine Rotation des Umlaufrads (11) um seine eigene Rotationsachse (12) hervorruft, wobei die Rotation des Umlaufrads (11) um seine eigene Rotationsache (12) eine Relativverdrehung der Eingangswelle oder Ausgangswelle (2) gegenüber dem Stellglied (3) bewirkt.

2. Servolenkbaugruppe nach Anspruch 1,
**dadurch gekennzeichnet, dass**
das Umlaufrädergetriebe konzentrisch um die Eingangswelle oder Ausgangswelle (2) und das Stellglied (3) angeordnet ist und ein drehfest mit dem Stellglied (3) verbundenes erstes Sonnenrad (15) aufweist und ein drehfest mit der Eingangswelle oder Ausgangswelle (2) verbundenes zweites Sonnenrad (16) aufweist, wobei das Umlaufrad (11) mit beiden Sonnenrädern (15, 16) in Dreheingriff steht.

3. Servolenkbaugruppe nach dem vorhergehenden Anspruch,
**dadurch gekennzeichnet, dass**
das Umlaufrad (11) ein Zahnrad ist und die beiden Sonnenräder (15, 16) des Umlaufrädergetriebes unterschiedliche Außenverzahnungen aufweisen.

4. Servolenkbaugruppe nach einem der vorhergehenden Ansprüche,
**dadurch gekennzeichnet, dass**
das wenigstens eine Umlaufrad (11) des Umlaufrädergetriebes von einem um die Umlaufachse (14) des Umlaufrädergetriebes drehbaren Umlaufradträger (13) drehbar gehalten ist, der in Dreheingriff mit dem Abtriebsglied (6) des Summiergetriebes steht.

5. Servolenkbaugruppe nach einem der vorhergehenden Ansprüche,
**dadurch gekennzeichnet, dass**
drehfest mit dem Stellglied (3) ein Nebenantriebsrad (10) verbunden ist, das mit dem ersten Antriebsglied (4) des Summiergetriebes in Dreheingriff steht.

6. Servolenkbaugruppe nach einem der vorhergehenden Ansprüche,
**dadurch gekennzeichnet, dass**
das Summiergetriebe ein Planetengetriebe mit einem Sonnenrad (5), einem oder mehreren von einem Planetenträger (6) drehbar gehaltenen Planetenrädern (7) und einem Hohlrad (4) ist, wobei das Hohlrad (4) das erste Antriebsglied, das Sonnenrad (5) das zweite Antriebsglied und der Planetenträger (6) das Abtriebsglied des Summiergetriebes bilden.

7. Servolenkbaugruppe nach Anspruch 5 und 6,
**dadurch gekennzeichnet, dass**
das Planetengetriebe ein Zahnradgetriebe ist, wobei das Hohlrad (4) sowohl eine Innenverzahnung, die mit dem einen oder den mehreren Planetenrädern (7) in Dreheingriff steht, als auch eine Außenverzahnung aufweist, die mit einer Verzahnung des Nebenantriebsrads (10) in Dreheingriff steht.

8. Servolenkbaugruppe nach einem der vorhergehenden Ansprüche,
**dadurch gekennzeichnet, dass**
der Aktor (9) ein elektrischer Antriebsmotor (9) ist und das Abtriebselement (8) eine von dem Antriebsmotor (9) angetriebene Abtriebswelle (8) ist, die drehfest mit dem zweiten Antriebsglied (5) des Summiergetriebes verbunden ist.

9. Servolenkbaugruppe nach einem der vorhergehenden Ansprüche,
**dadurch gekennzeichnet, dass**
das Summiergetriebe exzentrisch zur Eingangswelle oder Ausgangswelle (2) und dem Stellglied (3) angeordnet ist.

## Claims

1. A power steering assembly for a hydraulic power steering system of motor vehicles, comprising at least one hydraulic servo valve with a control member (3) for controlling the steering assistance in accordance with a relative rotation of an input shaft with respect to an output shaft (2), and at least one actuator (9) for the relative adjustment of the control member (3) with respect to the input shaft or output shaft (2) in order to influence the steering assistance characteristic,
**characterized by**
a summation gearing having a first rotatable drive member (4) that is in operative engagement with the control member (3), and a second rotatable drive member (5) that is in operative engagement with an output element (8) of the actuator (9), and an output member (6), wherein the summation gearing superposes a rotation of the first drive member (4) with a rotation of the second drive member (5) and drives, via the output member (6), an epicyclic gearing with at least one planetary gear (11), which is in operative engagement together with both the input shaft or output shaft (2) and with the control member (3) and can be rotated both about a planetary axis (14) fixed with respect to the frame and about its own axis of rotation (12) orbiting about the planetary axis (14), in such a way that a rotation of the first drive member (4) causes a rotation of the own axis of rotation (12) of the planetary gear (11) orbiting about the planetary axis (14) in such a way that no rotation of the planetary gear (11) about its own axis of rotation (12) occurs as a consequence, but a rotation of the second drive member (5) causes a rotation of the planetary gear (11) about its own axis of rotation (12), wherein the rotation of the planetary gear (11) about its own axis of rotation (12) causes a relative rotation of the input shaft or output shaft (2) with respect to the control member (3).

2. The power steering assembly according to claim 1,
**characterized in that,**
the epicyclic gearing is concentrically disposed around the input shaft or output shaft (2) and the control member (3) and has a first sun gear (15) non-rotatably connected to the control member (3) and has a second sun gear (16) non-rotatably connected to the input shaft or output shaft (2), wherein the planetary gear (11) is in rotational engagement with the two sun gears (15, 16).

3. The power steering assembly according to the preceding claim,
**characterized in that,**
the planetary gear (11) is a cogwheel and the two sun gears (15, 16) of the epicyclic gearing have different external toothings.

4. The power steering assembly according to any one of the preceding claims,
**characterized in that,**
the at least one planetary gear (11) of the epicyclic gearing is rotatably retained by a planetary gear carrier (13) which is rotatable about the planetary axis (14) of the epicyclic gearing and is in rotational engagement with the output member (6) of the summation gearing.

5. The power steering assembly according to any one of the preceding claims,
**characterized in that,**
a secondary drive gear (10), which is in rotational engagement with the first drive member (4) of the summation gearing, is non-rotatably connected to the control member (3).

6. The power steering assembly according to any one of the preceding claims,
**characterized in that,**
the summation gearing is a planetary gearing with a sun gear (5), one or several planet gears (7) rotatably retained by a planet carrier (6) and a ring gear (4), wherein the ring gear (4) forms the first drive member, the sun gear (5) forms the second drive member and the planet carrier (6) forms the output member of the summation gearing.

7. The power steering assembly according to claim 5 and 6,
**characterized in that,**
the planetary gearing is a toothed gearing, wherein the ring gear (4) has both an internal toothing, which is in rotational engagement with the one or several planet gears (7), and an external toothing, which is in rotational engagement with a toothing of the secondary drive gear (10).

8. The power steering assembly according to any one of the preceding claims,
**characterized in that,**
the actuator (9) is an electric drive motor (9) and the output element (8) is an output shaft (8), which is driven by the drive motor (9) and is non-rotatably connected to the second drive member (5) of the summation gearing.

9. The power steering assembly according to any one of the preceding claims,
**characterized in that,**
the summation gearing is disposed eccentrically with respect to the input shaft or output shaft (2) and the control member (3).

## Revendications

1. Ensemble de direction assistée pour une direction assistée hydraulique de véhicules automobiles, comprenant au moins une servovalve hydraulique ayant un vérin (3) pour commander l'assistance de direction en fonction d'une rotation relative d'un arbre d'entrée par rapport à un arbre de sortie (2), et au moins un actionneur (9) pour le déplacement relatif du vérin (3) par rapport à l'arbre d'entrée ou à l'arbre de sortie (2) afin d'influer sur la caractéristique d'assistance de direction,
**caractérisé par**
un engrenage de sommation comprenant un premier élément d'entraînement rotatif (4) qui est en prise active avec ledit vérin (3) et un deuxième élément d'entraînement rotatif (5) qui est en prise active avec un élément de sortie (8) de l'actionneur (9) ainsi qu'un élément de sortie (6), dans lequel ledit engrenage de sommation superpose une rotation du deuxième élément d'entraînement (5) à une rotation du premier élément d'entraînement (4), et entraîne, via ledit élément de sortie (6), un engrenage épicycloïdal comprenant au moins une roue planétaire (11) qui est en prise active en commun aussi bien avec l'arbre d'entrée ou l'arbre de sortie (2) qu'avec le vérin (3) et peut tourner aussi bien autour d'un axe de rotation (14) fixe du bâti qu'autour d'un propre axe de rotation (12) tournant autour dudit axe de rotation (14), de telle sorte qu'une rotation du premier élément d'entraînement (4) provoque une rotation du propre axe de rotation (12) de la roue planétaire (11), tournant autour dudit axe de rotation (14), de telle sorte que ceci ne conduit pas à une rotation de la roue planétaire (11) autour de son propre axe de rotation (12), par contre, une rotation du deuxième élément d'entraînement (5) provoque une rotation de la roue planétaire (11) autour de son propre axe de rotation (12), la rotation de la roue planétaire (11) autour de son propre axe de rotation (12) provoquant une rotation relative de l'arbre d'entrée ou de l'arbre de sortie (2) par rapport au vérin (3).

2. Ensemble de direction assistée selon la revendication 1, **caractérisé par le fait que** l'engrenage épicycloïdal est disposé de façon concentrique autour de l'arbre d'entrée ou de l'arbre de sortie (2) et du vérin (3) et comprend une première roue solaire (15) reliée de manière solidaire en rotation au vérin (3) ainsi qu'une deuxième roue solaire (16) reliée de manière solidaire en rotation à l'arbre d'entrée ou à l'arbre de sortie (2), dans lequel la roue planétaire (11) est en prise rotative avec les deux roues solaires (15, 16).

3. Ensemble de direction assistée selon la revendication précédente, **caractérisé par le fait que** la roue planétaire (11) est une roue dentée et que les deux roues solaires (15, 16) de l'engrenage épicycloïdal présentent des dentures extérieures différentes.

4. Ensemble de direction assistée selon l'une quelconque des revendications précédentes, **caractérisé par le fait que** ladite au moins une roue planétaire (11) de l'engrenage épicycloïdal est supportée en rotation par un support de roue planétaire (13) qui peut tourner autour de l'axe de rotation (14) de l'engrenage épicycloïdal et qui est en prise rotative avec l'élément de sortie (6) de l'engrenage de sommation.

5. Ensemble de direction assistée selon l'une quelconque des revendications précédentes, **caractérisé par le fait qu'**une roue motrice secondaire (10) est reliée de manière solidaire en rotation au vérin (3) et est en prise rotative avec le premier élément d'entraînement (4) de l'engrenage de sommation.

6. Ensemble de direction assistée selon l'une quelconque des revendications précédentes, **caractérisé par le fait que** l'engrenage de sommation est un engrenage planétaire comprenant une roue solaire (5), un ou plusieurs pignon(s) satellite(s) (7) supporté(s) en rotation par un porte-satellites (6), ainsi qu'une couronne (4), la couronne (4) formant le premier élément d'entraînement, la roue solaire (5) formant le deuxième élément d'entraînement et le porte-satellites (6) formant l'élément de sortie de l'engrenage de sommation.

7. Ensemble de direction assistée selon la revendication 5 et 6, **caractérisé par le fait que** l'engrenage planétaire est une transmission à engrenages, dans lequel la couronne (4) présente et une denture intérieure qui est en prise rotative avec ledit un ou lesdits plusieurs pignons satellites (7), et une denture extérieure qui est en prise rotative avec une denture de la roue motrice secondaire (10).

8. Ensemble de direction assistée selon l'une quelconque des revendications précédentes, **caractérisé par le fait que** l'actionneur (9) est un moteur électrique d'entraînement (9) et ledit élément de sortie (8) est un arbre de sortie (8) qui est entraîné par le moteur d'entraînement (9) et qui est relié de manière solidaire en rotation au deuxième élément d'entraînement (5) de l'engrenage de sommation.

9. Ensemble de direction assistée selon l'une quelconque des revendications précédentes, **caractérisé par le fait que** l'engrenage de sommation est disposé de manière excentrée par rapport à l'arbre d'entrée ou à l'arbre de sortie (2) et au vérin (3).
